# EUROPEAN PATENT APPLICATION

(11) **EP 4 495 842 A1**
(43) Date of publication of application: **22.01.2025**
(21) Application number: 23187003.1
(22) Date of filing: 21.07.2023
(51) Int. Cl.: G06N 10/20, G06N 10/70

(54) **QUANTUM COMPILING**

(71) Applicant: Technische Universität Berlin, 10623 Berlin (DE)
(72) Inventor: Weimer, Prof. Dr. Hendrik, 30659 Hannover (DE)
(74) Representative: Fleuchaus & Gallo Partnerschaft mbB

(57) **Abstract**

A quantum computer, comprising: at least one CPU and at least one QPU. The CPU includes: a branch predictor configured to form one or more result predictions or algorithm branches of a result of a measurement being performed or to be performed by the QPU; a compiler configured to generate respective sets of quantum gates corresponding to each of the one or more result predictions by performing respective one or more compilation tasks, each of the compilation tasks comprising compiling a portion of a hybrid quantum algorithm; and a quantum gate selector configured to receiving the result of the measurement and respond by passing to the QPU a set of quantum gates from the sets of quantum gates that corresponds to the result of the measurement.

## Description

### Field of the Invention

The present invention relates to a method of quantum compiling, of particular but by no means exclusive application in the implementation of hybrid quantum algorithms in quantum computing.

### Background

Quantum computers execute quantum algorithms that are controlled from a classical computer. A quantum computer therefore consists of a quantum processor (QPU) and a classical processor (CPU). Before the quantum algorithm can be executed on the QPU, the CPU must compile the quantum algorithm into elementary quantum gates that can be implemented by the QPU [1]. Which quantum gates are available depends on the specific architecture (e.g. superconducting qubits or ion traps).

A particular case of quantum algorithms are hybrid quantum algorithms, in which calculations on the QPU and classical calculations on the CPU are combined [2]. An important application of hybrid algorithms are quantum error correction methods, in which errors are detected by measurements on the QPU and these are corrected by suitable quantum gates (also on the QPU).

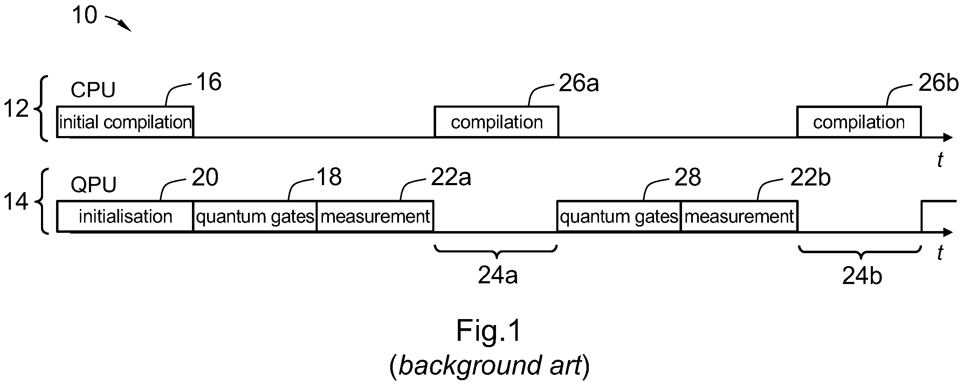

For hybrid quantum algorithms, measurements are carried out during the runtime of the quantum algorithm, and the further course of the algorithm then depends on the results of these measurements. Figure 1 is a schematic timing diagram 10 according to such an existing hybrid quantum algorithm, implemented by a CPU 12 and a QPU 14. Firstly, the quantum algorithm is subjected to an initial compilation 16 on CPU 12 into instructions (that is, elementary quantum gates 18) for implementation by QPU 14, and initialisation 20 of QPU 14 is performed. Next, the set of quantum gates 18 is executed on QPU 14 and a first measurement 22a is made. QPU 14 then has an inactive period 24a, during which the parts of the quantum algorithm that depend on results of first measurement 22a on QPU 14 are subjected to compilation 26a on CPU 12 into quantum gates 28 for implementation by QPU 14. A second measurement 22b is then made on QPU 14 and, during the subsequent inactive period 24b on QPU 14, those parts of the quantum algorithm that depend on results of second measurement 22b on QPU 14 are subjected to compilation 26b on CPU 12 into quantum gates for implementation by QPU 14-and so forth.

However, the coherence time of existing quantum computers imposes a limitation on this approach. If a quantum algorithm to be executed has a runtime that is longer than the coherence time, the results are likely to be too error-ridden to be useful. This runtime also includes the time the QPU waits for instructions from the CPU. This waiting time can increase significantly between two quantum gates if the CPU has to recompile part of the algorithm into quantum gates based on a measurement result from the previous step (cf. Figure 1).

This problem is especially significant in architectures with short coherence times, such as those employing superconducting qubits.

### Summary

According to a first aspect of the present invention, there is provided a computer-implemented method of executing a hybrid quantum algorithm in a quantum computer having at least one CPU and at least one QPU, the method comprising:
forming one or more result predictions (or algorithm branches) with the CPU of a result of a measurement being performed orto be performed by the QPU;
generating with the CPU respective sets of quantum gates corresponding to each of the one or more result predictions by performing respective one or more compilation tasks, each of the compilation tasks comprising compiling a portion of the algorithm;
receiving at the CPU the result of the measurement; and
providing the QPU with a set of quantum gates (from the sets of quantum gates if the sets include the correct set) that corresponds to the result of the measurement.

Thus, the CPU need not remain idle pending the completion of the measurement by the QPU, but instead conducts speculative compilation by continuing to compile in anticipation of the result of the measurement (and, subsequently, in anticipation of the results of the next, etc. measurement). The instructions (quantum gates) are determined speculatively. With speculative compiling, the dead time of the QPU is minimised, since the results of the compilation are generally already available in anticipation of the possible measurement results and the next quantum gates can be executed immediately after a measurement.

The present invention finds most immediate application in quantum error correction. However, it may be applied to any quantum algorithm, in which future quantum operations are conditional on measurement results. Thus, another important example are variational quantum estimation algorithms, such as for ground state calculations in quantum chemistry in which one needs to evaluate energy expectation values whose precision increases with the number of measurements; even if the final value for the energy measurement is not yet known, speculatively compilation can already be conducted for the most likely range of energy expectation values.

In an embodiment, the forming the one or more result predictions comprises modelling the QPU with a classical quantum computer model (that is, a classical model of the quantum computer). In some situations, there may be too many possible measurement results for all the associated compiling operations to be carried out in time, that is, before the associated measurement has been completed. Once the associated measurement has been completed, the correct set of quantum gates becomes apparent from the actual result of the measurement, so further speculative compilation becomes redundant. It is therefore desirable to optimize the branch prediction performed by the CPU (or a branch predictor thereof), and thereby maximize the likelihood that the correct quantum gates will be generated in time, that is, before the associated measurement yields a result.

Various strategies are conceivable and may be employed to carry out branch prediction reliably. For example, this may comprise modelling the distribution of the future measurement results on the basis of smaller problem instances (as this can be calculated on a classical computers), such as by simulating with the classical quantum computer model the selected quantum algorithm for a small number of qubits and extrapolating to larger qubit numbers.

In another example, the classical quantum computer model performs a classical simulation using tensor network states [4]. Tensor network states are classically computable representations of large quantum systems with limited quantum entanglement. This approach may be advantageous in the context of quantum error correction methods, as not all error syndromes are equally probable.

Alternatively, the classical quantum computer model may perform the classical simulation using one or more artificial neural networks or one or more quantum Monte-Carlo methods.

In an embodiment, the method includes determining a likelihood or relative likelihood of each of the one or more result predictions being correct (that is, agree with the ultimate result of the measurement).

For example, the method may comprise determining the likelihood or relative likelihood of each of the one or more result predictions with a classical quantum computer model (that is, a classical model of the quantum computer). The method may include executing or queuing the compilation tasks according to the likelihood or relative likelihood, and prioritizing the compilation tasks with higher likelihood or relative likelihood over the compilation tasks with lower likelihood or relative likelihood.

Determining these likelihoods (or probabilities) maximizes the likelihood that the correct set of quantum gates are generated by the time the corresponding measurement has been made, especially if the method includes queuing the compilation tasks so as to give the higher likelihood/probability compilation tasks higher priority. This maximizes the likelihood that, once a branch has been identified, the corresponding compilation task will be completed (and the corresponding set of quantum gates generated) by the time the actual result is received by the CPU.

In an embodiment, if a compilation task indicated by the measurement result received by the CPU has not been completed, the method includes responding by performing the compilation task indicated by the measurement result received by the CPU, generating the correct set of quantum gates, and passing the correct set of quantum gates to the QPU for execution. That is, the method may include determining that a compilation task indicated by the measurement result received by the CPU has not been completed and, in response, include performing the compilation task indicated by the measurement result received by the CPU, generating the correct set of quantum gates, and passing the correct set of quantum gates to the QPU for execution.

According to a second aspect of the present invention, there is provided a computer-implemented quantum error correction method, comprising the method of executing a hybrid quantum algorithm of the first aspect.

According to a third aspect of the present invention, there is provided a computer-implemented variational quantum estimation algorithmic method, comprising the method of executing a hybrid quantum algorithm of the first aspect.

According to a fourth aspect of the present invention, there is provided a quantum computer (which may be distributed), comprising:
at least one CPU; and
at least one QPU;
wherein the CPU includes:
   a branch predictor configured to form one or more result predictions (or algorithm branches) of a result of a measurement being performed or to be performed by the QPU;
   a compiler configured to generate respective sets of quantum gates corresponding to each of the one or more result predictions by performing respective one or more compilation tasks, each of the compilation tasks comprising compiling a portion of a hybrid quantum algorithm; and
   a quantum gate selector configured to receiving the result of the measurement and respond by passing to the QPU a set of quantum gates from the sets of quantum gates that corresponds to the result of the measurement.

In an embodiment, the CPU is configured (by circuitry or software) to form the one or more result predictions by modelling the QPU. For example, the CPU may include a classical quantum computer model. The classical quantum computer model may be configured to model the distribution of the future measurement results on the basis of smaller problem instances, such as by the classical quantum computer model being configured to simulate the selected quantum algorithm for a small number of qubits and to extrapolate to larger qubit numbers. In other examples, the classical quantum computer model performs a classical simulation using tensor network states, one or more artificial neural networks, or one or more quantum Monte-Carlo methods.

In an embodiment, the branch predictor is further configured to determine a likelihood or relative likelihood of each of the one or more result predictions being correct (that is, agree with the ultimate result of the measurement).

For example, the branch predictor be configured to determine the likelihood or relative likelihood of each of the one or more result predictions with a classical quantum computer model of the QPU. The branch predictor may execute or queue the compilation tasks according to the likelihood or relative likelihood, and prioritizing the compilation tasks with higher likelihood or relative likelihood over the compilation tasks with lower likelihood or relative likelihood.

In an embodiment, the CPU is configured to respond to determining that a compilation task indicated by the measurement result received by the CPU has not been completed by performing the compilation task indicated by the measurement result received by the CPU, generating the correct set of quantum gates, and passing the correct set of quantum gates to the QPU for execution.

Each of the components of the CPU may be implemented as circuitry or with software, or with a combination of the two.

It should be noted that any of the various individual features of each of the above aspects of the invention, and any of the various individual features of the embodiments described herein including in the claims, can be combined as suitable and desired.

### Brief Description of the Drawing

In order that the invention may be more clearly ascertained, embodiments will now be described by way of example with reference to the following drawing, in which:
Figure 1 is a schematic timing diagram of the implementation of a hybrid quantum algorithm of the background art;
Figure 2 is a schematic view of a quantum computing system according to an embodiment of the present invention;
Figure 3 is a schematic timing diagram of the implementation of a hybrid quantum algorithm according to an embodiment of the present invention; and
Figure 4 is a flow diagram of the execution of a hybrid quantum algorithm in a quantum computer according to an embodiment of the present invention.

### Detailed description

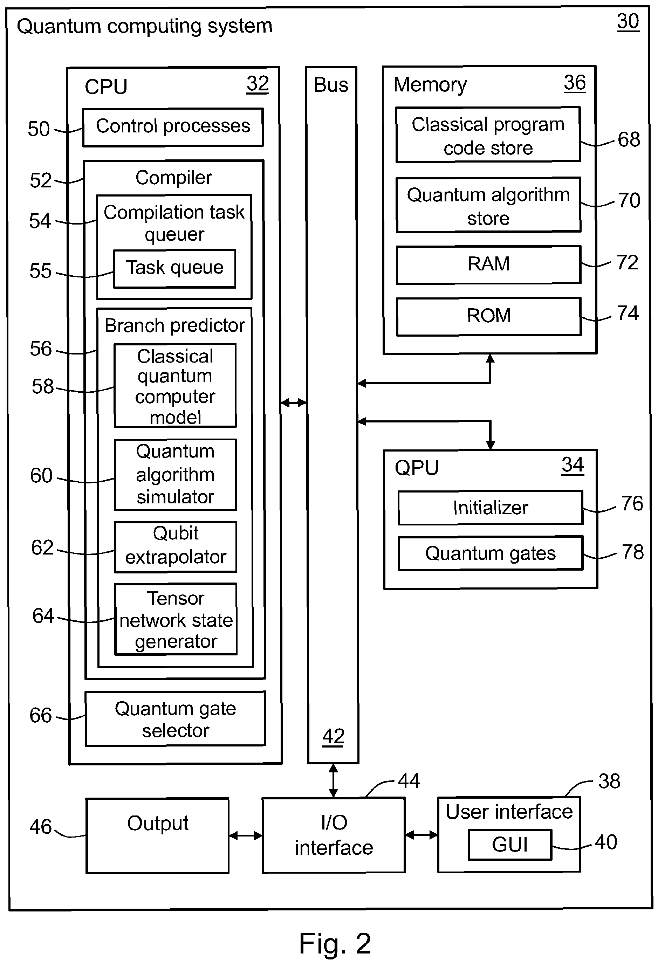

Figure 2 is a schematic view of a quantum computer in the form of a quantum computing system 30 configured, according to an embodiment of the present invention, to implement a hybrid quantum algorithm.

Quantum computing system 30 includes at least one classical processor (CPU) 32, a quantum processor (QPU) 34, memory 36 (which stores instructions and data to control the operation of CPU 18), a user interface 38 that includes a graphical user interface (GUI) 40, a communications bus 42, an I/O interface 44 and an output 46. User interface 38 and output 46 are in data communication with bus 42, and communications bus 42 mediates communication between CPU 32, QPU 34, memory 36 and I/O interface 44. Other elements typical of a computing system are omitted for clarity.

Quantum computing system 30 may be implemented as, for example, a combination of software and hardware, and may optionally be distributed with, for example, some or all of the components of memory 36 located remotely from CPU 32; user interface 38 may be located remotely from memory 36 and/or from CPU 32.

As is discussed in greater detail below, CPU 32 includes circuitry and/or executes software that implements control processes 50 that control QPU 34 and a compilation server in the form of a compiler 52. Control processes 50 control QPU 34. Compiler52 includes a compilation task queuer 54 that populates and manages a task queue 55 of compilation tasks, and a branch predictor 56 that includes a classical quantum computer model 58 (comprising a classical model of QPU 34), a quantum algorithm simulator 60, a qubit extrapolator 62, and a tensor network state generator 64. CPU 32 also includes a quantum gate selector 66.

Branch predictor 56 is configured to predict, and determine the relative likelihood of, respective measurement results of QPU 34, employing classical quantum computer model 58 to do so. For example, in many quantum error correcting codes, errors are strongly correlated, so if an error is detected on one qubit, the probability to find a second error in one of the neighbouring qubits is almost one. Compiler 52 is configured to perform the compilations operations indicated by these predicted measurement results, to thereby generate respective sets of quantum gates, and to store those generated sets of quantum gates (typically in cache memory (not shown) of CPU 32).

In the speculative quantum compilation method of this embodiment, classical quantum computer model 58 models, if imperfectly, QPU 34, such as by calculating a model for the distribution of the future measurement results on the basis of smaller problem instances, as this can be calculated on a classical computers. Hence, classical quantum computer model 58 employs quantum algorithm simulator 60 to simulate the selected quantum algorithm for a small number of qubits and then to extrapolate to larger qubit numbers.

Alternatively, classical quantum computer model 58 may perform a classical simulation using tensor network states [4] (which are classically computable representations of large quantum systems with limited quantum entanglement), generated by tensor network state generator 64; this approach may be advantageous in the context of quantum error correction methods, as not all error syndromes are equally probable.

As mentioned above, branch predictor 56 also determines the relative likelihood of the respective branches associated with possible measurement results of QPU 34. This allows the likelihood that the correct set of quantum gates are generated by the time the corresponding measurement has been made to be further maximized, as compilation task queuer 54 queues the compilation tasks in task queue 55 according to their relative likelihood as determined by branch predictor 56; compiler 52 is configured to perform the compilation tasks and generate respective sets of quantum gates accordingly. This maximizes the likelihood that the correct compilation task will be completed (and the corresponding set of quantum gates generated) by the time the actual result is received by CPU 32.

It is conceivable that the required branch may not be predicted by branch predictor 52 by the time CPU 32 receives the measurement result from QPU 34. It is also conceivable that the required branch may be predicted but the corresponding compilation task not completed in time. However, compiler 52 is configured to respond to those scenarios by promptly performing the compilation task indicated by the result and thereby generating the correct set of quantum gates.

Quantum gate selector 66 is configured to respond to receiving a measurement result from QPU 34 by selecting the corresponding set of quantum gates indicated thereby (such as from cache memory), and forwarding the selected, correct set of quantum gates to QPU 34 for execution. Quantum gate selector 66 is also configured such that, should it fail to locate a set of quantum gates indicated by the measurement result received from QPU 34, quantum gate selector 66 controls compiler52 to perform the compilation operations indicated by the received result, thereby generating the required set of quantum gates, and forward those quantum gates to QPU 34.

Itshould be noted that, because quantum computing system 30 may be distributed, classical quantum computer model 58, with quantum algorithm simulator 60 and/or tensor network state generator 64, may be located on a separate classical computer in data communication with quantum computing system 30. In addition, it should be noted that these two techniques (employing quantum algorithm simulator 60 and tensor network state generator 64) are similar. The first attempts to extrapolate from small qubit numbers to larger qubit numbers, while the second attempts to extrapolate from a small dimension of the tensors (which is a quantitative bound on the entanglement) to a large tensor dimension.

Memory 36 is in data communication with CPU 32 and QPU 34, and includes classical program code store 68 storing classical program code executable by CPU 32 and quantum algorithm store 70 storing quantum algorithms that are compilable by compiler 52 into quantum gates. The classical program code includes code for controlling QPU 34, and compiler52 may be implemented-at least in part-by CPU 32 executing program code from program code store 68. Memory 36 typically also includes both volatile and non-volatile memory (and may include more than one of type of memory), including Random Access Memory (RAM) 72, Read-Only Memory (ROM) 74 and one or more mass storage devices (not shown).

QPU 34 includes an initializer 76 and quantum gates 78, the latter being generated by and received from compiler 52 of CPU 32.

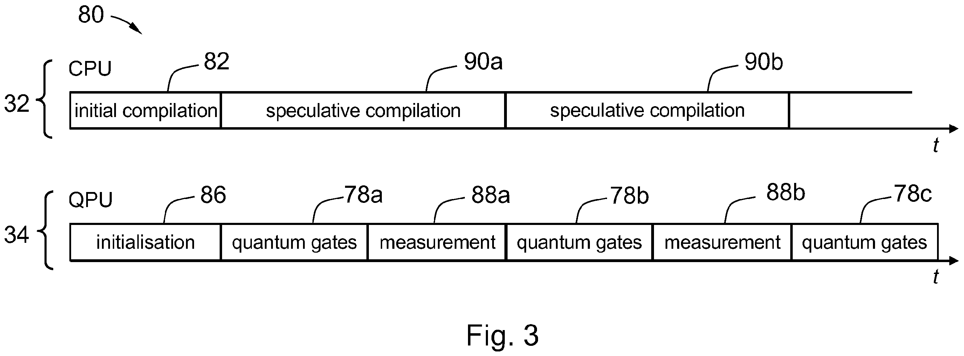

Figure 3 is a schematic timing diagram 80 of the implementation of a hybrid quantum algorithm according to the embodiment of Figure 2, implemented by CPU 32 and QPU 34 of quantum computing system 30.

Referring to Figure 3, compiler 52 of CPU 32 performs an initial compilation 82 of a selected quantum algorithm (from quantum algorithm store 70), and outputs instructions in the form of a first set of (elementary) quantum gates 78a for implementation by QPU 34; initializer 76 performs initialisation 86 of QPU 34. A first measurement 88a is then made on QPU 34 according to elementary quantum gates 78a.

Once initial compilation 82 is complete, however, CPU 32 does not remain idle pending the completion of first measurement 88a (cf. Figure 1). Rather, compiler 52 of CPU 32 is configured to conduct speculative quantum compilation in which compiler 52 continues to compile in anticipation of the result of first measurement 88a (and, subsequently, in anticipation of the results of second, third, etc. measurements 88b, 88c, etc).

Thus, compiler 52 performs a first speculative compilation 90a of the instructions (in the form of respective second sets of quantum gates) that may be required according to the results of first measurement 88a. This minimises the dead time of QPU 34, as the appropriate or correct second set quantum gates 78b will or is likely to be available in anticipation of the results of first measurement 42a. When the result of first measurement 88a is generated, that result is passed by QPU 34 to CPU 32; quantum gate selector 66 of CPU 32 responds by selecting or identifying that set of quantum gates that corresponds to the actual result of first measurement 88a and passing the correct second set of quantum gates 78b to QPU 34 for execution. Second set of quantum gates 78b can thereby be immediately executed after first measurement 88a, without waiting for compilation. If quantum gate selector 66 cannot locate the correct second set of quantum gates, quantum gate selector 66 controls compiler 52 to generate the correct set of quantum gates and to pass those quantum gates to QPU 34.

A second measurement 88b is then conducted according to the correct second set of quantum gates 78b, during which compiler 52 conducts speculative quantum compilation 90b in anticipation of the result of second measurement 88b, thereby generating respective third sets of quantum gates. The correct third set of quantum gates 78c are identified by quantum gate selector 66 upon receiving the result of the second measurement 88b from QPU 34 and quantum gate selector 66 passes the correct third set of quantum gates to QPU 34 for execution immediately after the completion of the second measurement 88b. If quantum gate selector 66 cannot locate the correct third set of quantum gates, quantum gate selector 66 controls compiler 52 to generate the correct set of quantum gates and to pass those quantum gates to QPU 34.

The procedure then continues in the same manner until the selected quantum algorithm has been executed in its entirety.

Thus, compiler 52 continuously accepts compilation requests from control processes 50 running the classical code that controls QPU 34 and, at each speculative compilation 90a, 90b, ..., compiler 52 attempts to speculatively compile sets of quantum gates for all possible results of the associated measurements 88a, 88b, ..., respectively, as identified by branch predictor 56.

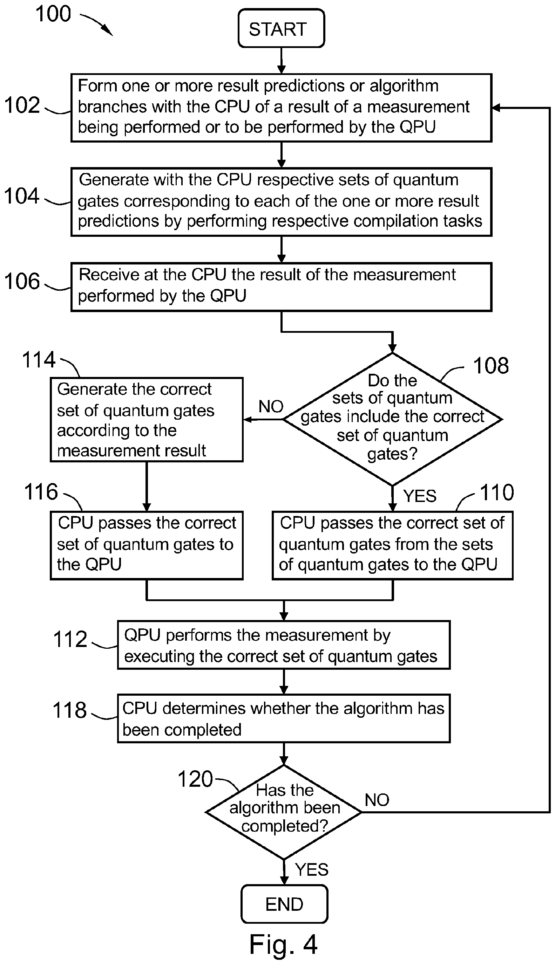

Figure 4 is a flow diagram 100 of the execution of a hybrid quantum algorithm in a quantum computer according to an embodiment of the present invention.

At step 102, one or more result predictions or algorithm branches are formed with branch predictor 56 of CPU 32 of a result of a measurement being performed or to be performed by QPU 34. At step 104, compiler 52 of CPU 32 generates respective sets of quantum gates corresponding to each of the one or more result predictions by performing respective compilation tasks.

At step 106, quantum gate selector 66 of CPU 32 receives the result of the measurement performed by QPU 34.

At step 108, quantum gate selector 66 determines whether the sets of quantum gates generated in step 104 include the correct set of quantum gates. If so, processing continues at step 110, where quantum gate selector 66 of CPU 32 provides QPU 34 with the correct set of quantum gates by passing the correct set of quantum gates from the sets of quantum gates to QPU 34. Processing then continues at step 112.

If, at step 108, quantum gate selector 66 determines that the sets of quantum gates generates in step 104 do not include the correct set of quantum gates, processing continues at step 114, where compiler 52 of CPU 32 generates the correct set of quantum gates according to the measurement result. At step 116, CPU 32 provides QPU 34 with the correct set of quantum gates by passing the correct set of quantum gates to QPU 34. Processing then continues at step 112.

At step 112, QPU 34 performs the measurement by executing the correct set of quantum gates. At step 118, CPU 32 determines, according to the algorithm that is being executed, whether that algorithm has been completed.

At step 120, if CPU 32 finds that the algorithm has not been completed, processing returns to step 102 and, if the algorithm has been completed, processing ends.

### References

[1] T. Schmale, B. Temesi, A. Baishya, N. Pulido-Mateo, L. Krinner, T. Dubielzig, C. Ospelkaus, U. Weimer, and D. Borcherding, in 2022 IEEE International Conference on Quantum Software (QSW) (2022) pp. 32-37.
[2] T. Lubinski, C. Granade, A. Anderson, A. Geller, M. Roetteler, A. Petrenko, and B. Heim, Advancing hybrid quantum-classical computation with real-time execution, Frontiers in Physics 10 (2022).
[3] P. Raghavan, H. Shachnai, and M. Yaniv, Dynamic schemes for speculative execution of code, Performance Evaluation 53 (2003) 125.
[4] R. Orus, A practical introduction to tensor networks: Matrix product states and projected entangled pair states, Ann. Phys. 349 (2014) 117.
[5] H. Weimer, Method for running a simulation on a quantum simulator, German Patent Application No. 10 2018 119 459.5 (2018).

It will be understood by persons skilled in the art of the invention that many modifications may be made without departing from the scope of the invention, in particular it will be apparent that certain features of embodiments of the invention can be employed to form further embodiments.

It is also to be understood that, if any prior art is referred to herein, such reference does not constitute an admission that the prior art forms a part of the common general knowledge in the art in any country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A computer-implemented method of executing a hybrid quantum algorithm in a quantum computer having at least one CPU and at least one QPU, the method comprising:
forming one or more result predictions or algorithm branches with the CPU of a result of a measurement being performed orto be performed by the QPU;
generating with the CPU respective sets of quantum gates corresponding to each of the one or more result predictions by performing respective one or more compilation tasks, each of the compilation tasks comprising compiling a portion of the algorithm;
receiving at the CPU the result of the measurement; and
providing the QPU with a set of quantum gates that corresponds to the result of the measurement.

2. A method as claimed in claim 1, wherein the forming of the one or more result predictions comprises modelling the QPU with a classical quantum computer model.

3. A method as claimed in claim 2, comprising:
modelling a distribution of the future measurement results on the basis of smaller problem instances; or
modelling a distribution of the future measurement results on the basis of smaller problem instances, and simulating with the classical quantum computer model the selected quantum algorithm for a small number of qubits and extrapolating to largerqubit numbers.

4. A method as claimed in claim 2, comprising the classical quantum computer model performing a classical simulation using:
tensor network states; or
one or more artificial neural networks; or
one or more quantum Monte-Carlo methods.

5. A method as claimed in any one of the preceding claims, comprising determining a likelihood or relative likelihood of each of the one or more result predictions being correct.

6. A method as claimed in claim 5, comprising:
determining the likelihood or relative likelihood of each of the one or more result predictions with a classical quantum computer model; and/or
executing or queuing the compilation tasks according to the likelihood or relative likelihood and prioritizing the compilation tasks with higher likelihood or relative likelihood over the compilation tasks with lower likelihood or relative likelihood.

7. A method as claimed in any one of the preceding claims, wherein, if a compilation task indicated by the measurement result received by the CPU has not been completed, the method includes responding by performing the compilation task indicated by the measurement result received by the CPU, generating the correct set of quantum gates, and passing the correct set of quantum gates to the QPU for execution.

8. A computer-implemented quantum error correction or variational quantum estimation algorithmic method, comprising the method of executing a hybrid quantum algorithm of any one of claims 1 to 7.

9. A quantum computer, comprising:
at least one CPU; and
at least one QPU;
wherein the CPU includes:
a branch predictor configured to form one or more result predictions or algorithm branches of a result of a measurement being performed or to be performed by the QPU;
a compiler configured to generate respective sets of quantum gates corresponding to each of the one or more result predictions by performing respective one or more compilation tasks, each of the compilation tasks comprising compiling a portion of a hybrid quantum algorithm; and
a quantum gate selector configured to receiving the result of the measurement and respond by passing to the QPU a set of quantum gates from the sets of quantum gates that corresponds to the result of the measurement.

10. A quantum computer as claimed in claim 9, wherein the CPU is configured to form the one or more result predictions by modelling the QPU.

11. A quantum computer as claimed in claim 10, wherein the CPU includes a classical quantum computer model.

12. A quantum computer as claimed in claim 11, wherein the classical quantum computer model is configured:
to model the distribution of the future measurement results on the basis of smaller problem instances; and/or
to simulate the selected quantum algorithm for a small number of qubits and to extrapolate to larger qubit numbers.

13. A quantum computer as claimed in either claim 11 or 12, wherein the classical quantum computer model performs a classical simulation using:
tensor network states; or
one or more artificial neural networks; or
one or more quantum Monte-Carlo methods.

14. A quantum computer as claimed in any one of claims 9 to 13, wherein the branch predictor is further configured to determine a likelihood or relative likelihood of each of the one or more result predictions being correct.

15. A quantum computer as claimed in claim 14, wherein the branch predictor is configured:
to determine the likelihood or relative likelihood of each of the one or more result predictions with a classical quantum computer model of the QPU; and/or
to execute or queue the compilation tasks according to the likelihood or relative likelihood and to prioritize the compilation tasks with higher likelihood or relative likelihood over the compilation tasks with lower likelihood or relative likelihood.

16. A quantum computer as claimed in any one of claims 9 to 15, wherein the CPU is configured to respond to determining that a compilation task indicated by the measurement result received by the CPU has not been completed by controlling the compiler to perform the compilation task indicated by the measurement result received by the CPU, to generate the correct set of quantum gates, and to pass the correct set of quantum gates to the QPU for execution.
